# EUROPEAN PATENT APPLICATION

(11) **EP 3 798 876 A1**
(43) Date of publication of application: **31.03.2021**
(21) Application number: 18936824.4
(22) Date of filing: 08.10.2018
(51) Int. Cl.: G06F 21/32

(54) **BIOMETRIC IDENTIFICATION METHOD AND APPARATUS, AND ELECTRONIC DEVICE**

(71) Applicant: SHENZHEN GOODIX TECHNOLOGY CO., LTD., Shenzhen, Guangdong 518045 (CN)
(72) Inventor: ZHANG, Wei, Shenzhen, Guangdong 518045 (CN); QING, Xiaogang, Shenzhen, Guangdong 518045 (CN); ZHOU, Fei, Shenzhen, Guangdong 518045 (CN)
(74) Representative: Pfenning, Meinig & Partner mbB
(86) International application number: PCT/CN2018/109349
(87) International publication number: WO 2020/073169

(57) **Abstract**

A method and apparatus for biometric identification and an electronic device. The method for biometric identification includes: performing imaging according to a light signal transmitted from a skin when each light source of at least one light source illuminates the skin sequentially; and performing biometric identification according to at least one image obtained by the imaging. The method can effectively improve performance of biometric identification.

## Description

### TECHNICAL FIELD

The present application relates to the field of information technology, and more particularly, to a method and apparatus for biometric identification and an electronic device.

### BACKGROUND

With the rapid development of science and technology, biometric identification technology has been widely applied in various fields such as mobile terminals and smart homes. At present, in the identification of biometric characteristics, a certain wavelength of visible light is adopted to illuminate the biometric characteristics, and a reflection imaging principle of visible light is used to transmit a reflected light signal carrying information of biometric characteristics to a sensor for capturing, so as to confirm the legitimacy of a user's identity according to a comparison between captured information and pre-registered and stored biometric characteristics.

However, the above method is easily affected by a contact between biometric characteristics and a detection surface. Each time the user performs biometric identification, the strength of pressing and effort point are different, and a finger is dry, or the like, which may affect the performance of identification.

Therefore, how to effectively improve performance of biometric identification has become an urgent problem to be solved.

### SUMMARY

Embodiments of the present application provide a method and apparatus for biometric identification and an electronic device, which can effectively improve performance of biometric identification.

In a first aspect, provided is a method for biometric identification, including:
performing imaging according to a light signal transmitted from a skin when each light source of at least one light source illuminates the skin sequentially; and performing biometric identification according to at least one image obtained by the imaging.

In the embodiment of the present application, each light source of at least one light source is adopted to illuminate a skin, and at least one image for biometric identification is acquired by using a principle of light transmission imaging. In the process of biometric identification, biometric characteristics do not need to contact a detection surface, which reduces the impact of the contact surface on biometric identification, thereby improving performance of biometric identification.

In some possible implementation manners, the at least one light source is an infrared light source, and the light signal is an infrared light signal.

In some possible implementation manners, the at least one light source is a plurality of light sources, and the plurality of light sources are arranged in different directions relative to an identification region.

By arranging a plurality of light sources in different directions relative to an identification region, the light sources in different directions can be sequentially used for imaging, which solves the problem of poor imaging quality during illumination in a certain direction that may exist when a single light source is adopted in the process of biometric identification, and can further improve performance of biometric identification.

In some possible implementation manners, the performing biometric identification according to the at least one image obtained by the imaging includes: merging a plurality of images obtained by the imaging to obtain a merged image; and performing biometric identification according to the merged image.

In some possible implementation manners, the performing biometric identification according to the at least one image obtained by the imaging includes: performing biometric identification according to a first image obtained by the imaging; if the identification according to the first image fails, performing biometric identification according to a next image obtained by the imaging; if identification according to a plurality of images obtained by the imaging fails, merging the plurality of images to obtain a merged image; and performing biometric identification according to the merged image.

In some possible implementation manners, the performing biometric identification according to the at least one image obtained by the imaging includes: performing biometric identification according to a first image obtained by the imaging; if the identification according to the first image fails, merging a plurality of images obtained by the imaging to obtain a merged image; and performing biometric identification according to the merged image.

In some possible implementation manners, the first image is an image obtained by performing imaging according to a light signal transmitted from the skin when a default light source of the plurality of light sources illuminates the skin.

In some possible implementation manners, the plurality of light sources include a first light source and a second light source, and a connecting line between the first light source and a center of the identification region is perpendicular to a connecting line between the second light source and the center of the identification region.

In a second aspect, provided is an apparatus for biometric identification, including:
at least one light source; and a sensor configured to perform imaging according to a light signal transmitted from a skin when each light source of at least one light source illuminates the skin sequentially, where at least one image obtained by the imaging of the sensor is used for biometric identification.

In some possible implementation manners, the at least one light source is an infrared light source, and the light signal is an infrared light signal.

In some possible implementation manners, the at least one light source is a plurality of light sources, and the plurality of light sources are arranged in different directions relative to an identification region.

In some possible implementation manners, the plurality of light sources include a first light source and a second light source, and a connecting line between the first light source and a center of the identification region is perpendicular to a connecting line between the second light source and the center of the identification region.

In some possible implementation manners, the apparatus further includes:
a processor configured to perform biometric identification according to at least one image obtained by the imaging of the sensor.

In some possible implementation manners, the processor is configured to: merge a plurality of images obtained by the imaging to obtain a merged image; and perform biometric identification according to the merged image.

In some possible implementation manners, the processor is configured to: perform biometric identification according to a first image obtained by the imaging; if the identification according to the first image fails, perform biometric identification according to a next image obtained by the imaging; if identification according to a plurality of images obtained by the imaging fails, merge the plurality of images to obtain a merged image; and perform biometric identification according to the merged image.

In some possible implementation manners, the processor is configured to: perform biometric identification according to a first image obtained by the imaging; if the identification according to the first image fails, merge a plurality of images obtained by the imaging to obtain a merged image; and perform biometric identification according to the merged image.

In some possible implementation manners, the first image is an image obtained by the sensor performing imaging according to a light signal transmitted from the skin when a default light source of the plurality of light sources illuminates the skin.

In a third aspect, provided is an electronic device for biometric identification, including the apparatus for biometric identification in the second aspect or any possible implementation manner of the second aspect.

### BRIEF DESCRIPTION OF THE DRAWINGS

FIG. 1 is a schematic diagram of an apparatus for biometric identification according to an embodiment of the present application.
FIGS. 2 and 3 are schematic diagrams of biometric images obtained in different illumination directions according to embodiments of the present application.
FIGS. 4 and 5 are schematic diagrams of arranging positions of light sources according to embodiments of the present application.
FIG. 6 is a schematic diagram of image merging according to an embodiment of the present application.
FIG. 7 is a schematic flowchart of a method for biometric identification according to an embodiment of the present application.
FIG. 8 is an example flowchart of a method for biometric identification according to another embodiment of the present application.

### DESCRIPTION OF EMBODIMENTS

Technical solutions in embodiments of the present application will be described hereinafter with reference to the accompanying drawings.

The increasing popularity of electronic devices has gradually penetrated into all aspects of people's daily life, and has caused information security issues while providing convenience for people's lives. With the development of science and technology, traditional password identification technology has shortcomings of being easily lost, stolen, and forgotten. In addition, a password is not uniquely bound to a user. Once someone else obtains this information, he will have the same rights as the owner, which has a serious security impact on people's lives. However, biometric identification makes up for the shortcomings of traditional password identification, so biometric identification technology has attracted more and more attention.

The so-called biometric identification technology refers to: by means of close integration of computers with high-tech means such as optics, acoustics, biosensors and biostatistics principles, the use of inherent physiological characteristics of a human body (such as fingerprints, facial features, iris, etc.) and behavioral characteristics (such as handwriting, voice, gait, etc.) for authentication of personal identity, which can be widely used in government, military, banking, social welfare security, e-commerce, security and defense. In the current age of information and technology, biometric identification is gradually emerging, and it will be a general trend to gradually replace the traditional password identification.

The specific identification process of optical biometric identification can be: adopting a certain wavelength of visible light, which usually is green light with a wavelength of 500 nm-560 nm, as a light source for illuminating biometric characteristics. When the biometric characteristics touch, are pressed against, or approach (collectively referred to as pressing in the present application for convenience of description) a detection surface, visible light emitted by a visible light source is reflected by the biometric characteristics in contact with the detection surface to form a light signal containing information of the biometric characteristics. An optical sensor receives the reflected light and uses a principle of light reflection imaging to perform biometric identification.

However, since visible light cannot transmit through a surface of a skin, it can only scan a surface of a finger skin or a dead skin layer, which is easily affected by the contact between the finger and the detection surface, and reduces the performance of biometric identification.

In order to improve performance of biometric identification, an embodiment of the present application provides a technical solution for biometric identification based on a principle of light transmission imaging.

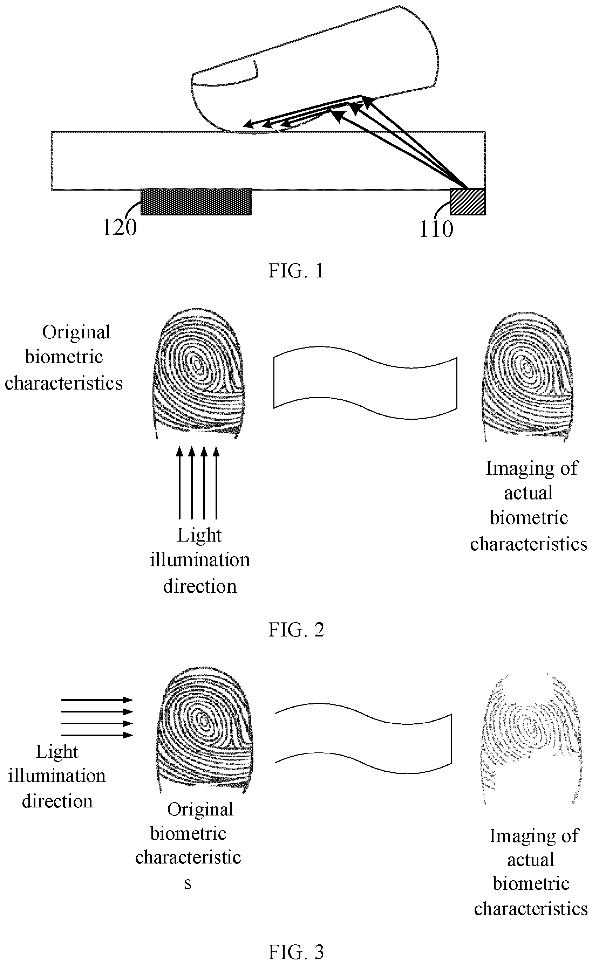

FIG. 1 shows a schematic diagram of an apparatus for biometric identification according to an embodiment of the present application.

As shown in FIG. 1, the apparatus for biometric identification of the embodiment of the present application may include at least one light source 110 and a sensor 120.

The at least one light source 110 is an excitation light source for biometric identification.

The sensor 120 performs imaging according to a light signal transmitted from a skin when each light source of the at least one light source illuminates the skin sequentially, where at least one image obtained by the imaging of the sensor 120 is used for biometric identification.

In the embodiment of the present application, imaging is performed according to the light signal transmitted from the skin. As an example, for fingerprint identification, as shown in FIG. 1, the light source 110 generates light capable of transmitting through a skin. The light illuminates a finger and transmits through the finger skin into a dermal layer, and then is transmitted from the skin after being reflected and scattered by a subcutaneous tissue of the finger. When the transmitted light passes through valleys and ridges of a fingerprint of the finger, the fingerprint valleys and the fingerprint ridges have different light absorption capabilities. Specifically, the fingerprint valleys have a weaker light absorption capability, and the transmitted light is strong, while the fingerprint ridges have a stronger light absorption capability, and the transmitted light is weak. Therefore, a light signal carrying fingerprint characteristic information transmitted from the finger skin enters into the sensor 120, and the sensor 120 captures the fingerprint characteristic information included in the light signal for imaging, and performs fingerprint identification.

In the embodiment of the present application, each light source of at least one light source is adopted to illuminate a skin, and at least one image for biometric identification is acquired by using a principle of light transmission imaging. In the process of biometric identification, biometric characteristics do not need to contact a detection surface, which reduces the impact of the contact surface on biometric identification, thereby improving performance of biometric identification.

It should be understood that the technical solution of the embodiment of the present application can be applied to various electronic devices, for example, portable or mobile computing devices such as a smart phone, a notebook computer, a tablet computer and a game device, and other electronic devices such as an electronic database, an automobile and an automated teller machine (Automated Teller Machine, ATM), which is not limited in the embodiment of the present application.

It should also be understood that in addition to fingerprint identification, the technical solution of the embodiment of the present application can also perform other biometric identification based on a principle of transmission imaging, for example, face identification and the like, which is not limited in the embodiment of the present application. For convenience of illustration, description is made by an example of fingerprint identification in the embodiment of the present application.

In some alternative embodiments, the light source 110 may be an infrared light source, and the light signal transmitted from the finger skin is an infrared light signal.

Optionally, in some embodiments, the light source 110 may be a light-emitting diode (Light-Emitting Diode, LED), a laser diode (Laser Diode, LD), or a photodiode that can generate infrared light, which is not limited in the embodiment of the present application.

In some alternative embodiments, the light source 110 may also emit other light capable of transmitting through the skin, such as near-infrared light, and the corresponding transmitted light signal is a near-infrared signal, which is not limited in the embodiment of the present application.

It should be understood that the embodiment of the present application does not particularly limit the relative positional relationship between the light source 110 and the sensor 120. The light source 110 and the sensor 120 may be placed side by side or placed in other ways, as long as the light source 110 and the sensor 120 can perform biometric identification.

The technical solution of the embodiment of the present application may be a technical solution for under-screen biometric identification, that is, the sensor or a related component is arranged under a display screen, or it may be a technical solution for in-screen biometric identification, that is, the sensor or a related component is arranged in a display screen.

Optionally, in some embodiments, the sensor 120 may be a complementary metal oxide semiconductor (Complementary Metal Oxide Semiconductor, CMOS) sensor, and the sensor 120 is used to capture biometric characteristics of the desired detection region. The CMOS sensor process is more mature, is easier to achieve a range of central sensitive wavelength through process doping, and is lower than that of a charge-coupled device (Charge-coupled Device, CCD) in costs, and a driving circuit thereof is simpler than that of a CCD. The sensor 120 may also use other types of sensors, which are not limited in the embodiment of the present application.

Optionally, in some embodiments, the sensor 120 may also be used in combination with a distance sensor. The distance sensor is configured to detect a distance from biometric characteristics of a user such as a finger or a palm to a detection region of the biometric characteristics, and may further switch the sensor 120 from a standby (sleep) state to a working state when the distance is less than or equal to a specific distance threshold, so as to facilitate image capturing.

It should be understood that in the case that the sensor 120 is in the working state, the sensor 120 can perform image capturing when the biometric characteristics are close; and in the case that the sensor 120 is in the standby state, even if the biometric characteristics are close to the sensor 120, the sensor 120 does not perform image capturing. Therefore, when image capturing is not performed, the sensor 120 is switched to the standby state, which can reduce power consumption of a device.

Optionally, in some embodiments, the distance threshold may be an imaging distance of the sensor 120, that is, the farthest distance that the sensor 120 can perform imaging. For example, the distance threshold may be 10cm, 5cm, etc., and the specific value may be determined according to actual needs.

In the embodiment of the present application, a principle of light transmission imaging is mainly used, and a direction of a light source that illuminates biometric characteristics and a direction of textures in the biometric characteristics are more important for an imaging result. When an illumination direction of a light source is perpendicular to a direction of textures in biometric characteristics, a clear biometric image can be basically acquired, as shown in FIG. 2. When an illumination direction of a light source is parallel to a direction of most of the textures in biometric characteristics, overall image quality is poor, as shown in FIG. 3, and complete information of the biometric characteristics cannot be accurately represented, which affects subsequent authentication of the biometric characteristics.

In order to solve the above problems caused by a single light source transmitting through the skin for imaging and further improve performance of biometric identification, in the embodiment of the present application, a plurality of light sources 110 are arranged in different directions relative to an identification region, the plurality of light sources 110 can illuminate the biometric characteristics from different directions, and the sensor 120 performs imaging correspondingly to obtain a plurality of images for biometric identification so as to improve performance of biometric identification.

The above identification region may be a part region of a display screen or the entire region of a display screen, that is, for the purpose of full-screen biometric identification.

Optionally, the plurality of light sources 110 may include a first light source and a second light source, and a connecting line between the first light source and a center of the identification region is perpendicular to a connecting line between the second light source and the center of the identification region. That is, at least two of the plurality of light sources are arranged in such a way that directions in which the two light sources illuminate the biometric characteristics are perpendicular.

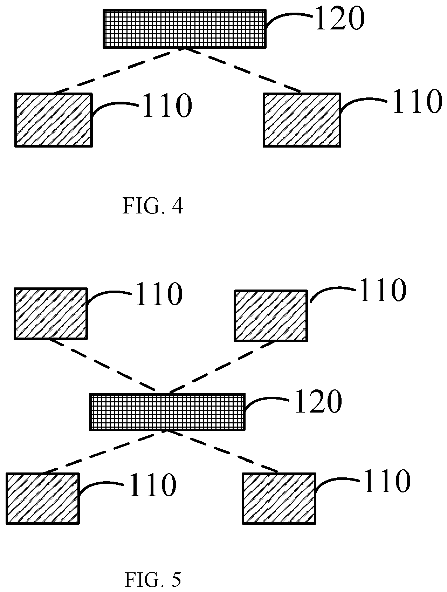

FIG. 4 is a schematic diagram of arranging positions of two light sources according to an embodiment of the present application.

FIG. 4 is a top view. As shown in FIG. 4, two light sources 110 and a sensor 120 may form an isosceles triangle. Optionally, an apex angle of the isosceles triangle may be an obtuse angle, and an identification region may be arranged above the sensor 120, so that the two light sources 110 can illuminate biometric characteristics on the identification region in substantially vertical illumination directions. When identification is performed, the two light sources 110 can sequentially illuminate a skin from different directions, and the sensor 120 performs imaging correspondingly according to a light signal transmitted from a skin when each light source illuminates the skin sequentially. In this way, two images can be acquired, and biometric identification can be subsequently performed based on at least one image according to needs.

FIG. 5 shows a schematic diagram of arranging positions of four light sources according to another embodiment of the present application.

FIG. 5 is a top view. As shown in FIG. 5, four light sources 110 may be arranged at four corners of a rectangle centered on the center of a sensor 120. An identification region may be arranged above the sensor 120, so that the four light sources 110 can illuminate biometric characteristics on the identification region in substantially vertical illumination directions. When identification is performed, the four light sources 110 can sequentially illuminate a skin from different directions, and the sensor 120 may perform imaging correspondingly according to a light signal transmitted from a skin when each light source illuminates the skin sequentially. In this way, four images can be acquired, and biometric identification can be subsequently performed based on at least one image according to needs.

By arranging a plurality of light sources in different directions relative to an identification region, the light sources in different directions can be sequentially used for imaging, which solves the problem of poor imaging quality during illumination in a certain direction that may exist when a single light source is adopted in the process of biometric identification, and can further improve performance of biometric identification.

In some alternative embodiments, a plurality of light sources may also be arranged at one light source position shown in FIGS. 4 and 5, which is not limited in the embodiment of the present application.

It should be understood that the above only shows schematic diagrams of the positions of two light sources and four light sources, and more light sources may also be arranged, which is not limited in the embodiment of the present application.

It should also be understood that, in the embodiment of the present application, a connecting line between one light source and a center of the identification region is perpendicular to a connecting line between another light source and the center of the identification region. In actual applications, an angle between the two connecting lines may be approximately 90 degrees, but is not limited to 90 degrees, for example, it may be 80 degrees or 100 degrees, which is not limited in the embodiment of the present application.

In some alternative embodiments, in the process of sequentially obtaining a plurality of biometric images, the plurality of biometric images can be acquired by serially scanning light sources in different directions.

In some alternative embodiments, the apparatus for biometric identification may further include a control circuit for sequentially controlling a sequence of turning on each light source. The control circuit is connected with each light source and is configured to control the sequence of turning on the light source. For example, the control circuit first turns on a first light source to illuminate a skin, the sensor performs imaging according to a light signal transmitted from the skin, and then the control circuit controls the first light source to be turned off and a second light source to be turned on, and further acquires the corresponding biometric image, and so on.

It should be understood that in actual applications, the light source may be controlled to be turned on in any order, which is not limited in the embodiment of the present application.

Optionally, the apparatus for biometric identification may further include a processor configured to perform biometric identification according to at least one image obtained by the imaging of the sensor 120.

The processor may be a processor of an electronic device, or a separately provided processor for biometric identification, which is not limited in the embodiment of the present application.

Optionally, in an embodiment of the present application, the processor is configured to:
merge a plurality of images obtained by the imaging to obtain a merged image; and
perform biometric identification according to the merged image.

In the embodiment, the processor directly merges a plurality of sequentially obtained images to obtain a merged image, and performs biometric identification according to the merged image.

Optionally, the processor may also first perform biometric identification according to a first image obtained first, and then determine whether the plurality of images need to be merged according to an identification result, which will be described in detail below.

Optionally, in an embodiment of the present application, the processor is configured to:
perform biometric identification according to a first image obtained by the imaging;
if the identification according to the first image fails, perform biometric identification according to a next image obtained by the imaging;
if identification according to a plurality of images obtained by the imaging fails, merge the plurality of images to obtain a merged image; and
perform biometric identification according to the merged image.

Specifically, in the embodiment, a first image is captured first. Optionally, the first image is an image obtained by the sensor performing imaging according to a light signal transmitted from the skin when a default light source of the plurality of light sources illuminates the skin. For example, the default light source may be a light source that can acquire an image of the highest quality when a finger approaches a display screen in the most accustomed way. The processor first performs biometric identification according to the first image obtained by the imaging, and ends the identification process if the identification is successful. If the identification fails, a next image is captured, and the processor performs biometric identification according to the next image obtained by the imaging, and so on. If identification according to a plurality of images obtained by the imaging fails, the plurality of images are merged to obtain a merged image, and biometric identification is performed according to the merged image. By adopting the manner of the embodiment, it is not necessary to capture all images and perform image merging under normal circumstances, so that identification speed can be improved.

Optionally, in an embodiment of the present application, the processor is configured to:
perform biometric identification according to a first image obtained by the imaging;
if the identification according to the first image fails, merge a plurality of images obtained by the imaging to obtain a merged image; and
perform biometric identification according to the merged image.

Specifically, in the embodiment, a first image is captured first. The first image may be similar to that in the foregoing embodiment, and will not be repeated here. The processor first performs biometric identification according to the first image obtained by the imaging, and ends the identification process if the identification is successful. If the identification fails, other images are captured, and the processor merges the plurality of obtained images to obtain a merged image, and performs biometric identification according to the merged image. Similarly, by adopting the manner of the embodiment, it is not necessary to capture all images and perform image merging under normal circumstances, so that identification speed can be improved.

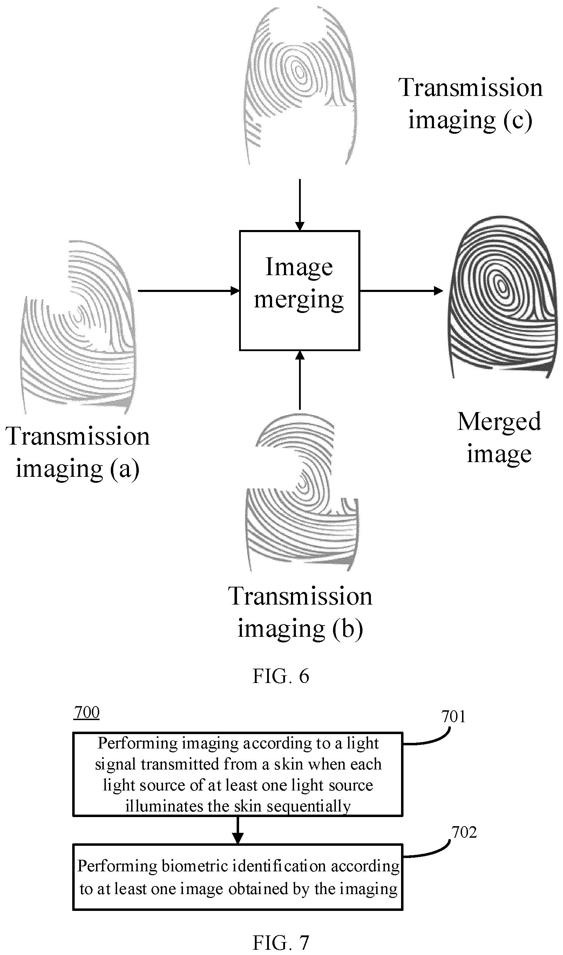

FIG. 6 is a schematic diagram of image merging according to an embodiment of the present application.

As shown in FIG. 6, as an example, for fingerprint imaging, the figure contains three acquired fingerprint images, i.e., an image (a), an image (b), and an image (c), respectively, which are respectively obtained by performing imaging according to light signals transmitted from a skin when three light sources illuminate the skin sequentially. Illumination directions of the light sources for imaging are different, which may be parallel to a direction of some textures in a fingerprint, and thus the generated fingerprint image is not clear. For example, a top part of a fingerprint image in the image (a) is not clear, a right part of a fingerprint image in the image (b) is not clear, and a left side of a fingerprint image in the image (c) is not clear. In order to obtain a clear fingerprint image, three defective images can be processed through image merging to obtain a clear fingerprint image. A merged image contains complete detail information of biometric characteristics, so that image quality is improved, and performance of biometric identification is further improved.

It should be understood that the image merging method in the embodiment of the present application may be any merging method, such as a wavelet transform, a gray-scale weighted average method, or a pyramid decomposition merging method, which is not limited in the embodiment of the present application.

FIG. 7 is a schematic flowchart of a method for biometric identification according to an embodiment of the present application.

Steps or operations in FIG. 7 are merely examples. Other operations or variants of operations in FIG. 7 may alternatively be performed in the embodiment of the present application. In addition, the steps in FIG. 7 may be separately performed in an order different from that presented in FIG. 7, and not all of the operations in FIG. 7 may necessarily be performed.

The method shown in FIG. 7 may be executed by the apparatus for biometric identification in the foregoing embodiment of the present application. For related description, reference may be made to the foregoing embodiment. In addition, description in the following embodiment may also be incorporated into the foregoing embodiment, and for the sake of brevity, details are not described again.

As shown in FIG. 7, the method 700 may include the following steps:
701, performing imaging according to a light signal transmitted from a skin when each light source of at least one light source illuminates the skin sequentially; and
702, performing biometric identification according to at least one image obtained by the imaging.

It should be noted that in the embodiment of the application, the at least one image for biometric identification may not necessarily correspond to the at least one light source in 701. When there is only one light source, an image is obtained. At this time, the at least one light source corresponds to the at least one image. When the at least one light source is a plurality of light sources, a plurality of images may be obtained, or only one image may be obtained, and the at least one image for biometric identification does not necessarily correspond to the at least one light source in a one-to-one manner.

Optionally, in an embodiment of the present application, a plurality of images obtained by the imaging may be merged to obtain a merged image, and biometric identification is performed according to the merged image.

Optionally, in an embodiment of the present application, biometric identification may be performed according to a first image obtained by the imaging; if the identification according to the first image fails, biometric identification is performed according to a next image obtained by the imaging; if identification according to a plurality of images obtained by the imaging fails, the plurality of images are merged to obtain a merged image; and biometric identification is performed according to the merged image.

Optionally, in an embodiment of the present application, biometric identification may be performed according to a first image obtained by the imaging; if the identification according to the first image fails, a plurality of images obtained by the imaging are merged to obtain a merged image; and biometric identification is performed according to the merged image.

In some alternative embodiments, not all of the acquired images need to be merged, but several of them may be selected arbitrarily for merging, and a merged image is used for biometric identification, which is not limited in the embodiment of the present application.

In practice, in the process of biometric identification, computational complexity of an image merging algorithm is relatively high. As the number of images participating in the merging increases, the complexity increases, time consumption is large, and real-time performance of biometric identification becomes worse, which affects the actual application. Therefore, image merging can be performed according to needs to further improve identification speed.

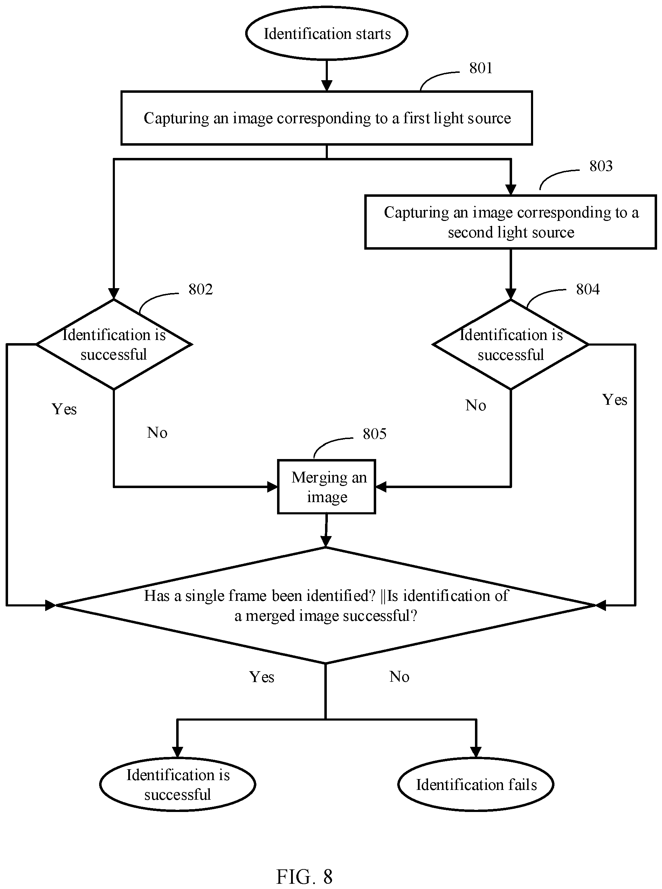

FIG. 8 shows an example flowchart of a method for biometric identification according to an embodiment of the present application.

It should be noted that, in the embodiment of the present application, two light sources are taken as an example. In practice, the number of light sources is not limited to this, and can be set according to different actual application scenarios, which is not limited in the embodiment of the present application.

As shown in FIG. 8, preferably, when biometric identification is performed, light sources arranged in various directions are scanned serially, and imaging is performed according to a light signal transmitted from a skin when each of the two light sources illuminates the skin sequentially. In order to improve the speed of biometric identification, in 801, an image corresponding to a first light source is first captured. The first light source may be a default light source described in the foregoing embodiment. In 802, biometric identification is performed according to the image corresponding to the first light source, and if the identification is successful, an identification process is stopped. If the identification fails, an image corresponding to a second light source is captured in 803, and biometric identification is performed according to the image corresponding to the second light source in 804. Similarly, if the identification is successful, the identification process is stopped. If the identification fails, in 805, the two images are merged, and an image obtained by merging is used for biometric identification.

Therefore, image merging technology can extract beneficial information in each biometric image, and finally integrate the information into a biometric image of high quality, which improves the performance of biometric identification. Moreover, when biometric identification is performed, each single image is first used for biometric identification, and image merging is performed only when identification of all single images fails, which can increase the speed of biometric identification.

Optionally, in actual applications, an image imaged when a light source (a default light source) on a customary side transmits through the skin may be first selected for biometric identification.

In some alternative embodiments, when there are a plurality of light sources, an image obtained when a light source on a customary side transmits through the skin may be first used for biometric identification. If the identification is successful, the identification is stopped, indicating that the user is an authorized legal user; and if the identification fails, a plurality of images obtained are merged, and biometric identification is performed according to the merged image.

In some alternative embodiments, an image obtained when a light source on a customary side transmits through the skin is first used for biometric identification. If the identification is successful, the identification is stopped, indicating that the user is an authorized legal user; and if the identification fails, the remaining images are first used to perform biometric identification respectively. If there is at least one image of which biometric identification is successful, biometric identification is stopped; and if biometric identification of all single images fails, all images are merged, and a merged image is used for biometric identification.

In some alternative embodiments, an image obtained when a light source on a customary side transmits through the skin is first used for biometric identification. If the identification is successful, the identification is stopped, indicating that the user is an authorized legal user; and if the identification fails, one image is selected arbitrarily from the remaining images for biometric identification. If the identification is successful, the identification is stopped; and if the identification fails, these two images are merged and a merged image is used for biometric identification. If the identification is successful, the identification is stopped; and if the identification fails, one image is continued to be selected arbitrarily from the remaining images except for the two images for biometric identification. If the identification is successful, the biometric identification is stopped; and if the identification fails, these three images are merged, and a merged image is used for biometric identification. If the identification is successful, the identification is stopped; and if the identification fails, the above operation is continued to be repeated until biometric identification is performed according to the last image. If the identification is successful, the identification is stopped; and if the identification fails, all the images are merged, and biometric identification is performed according to a merged image.

An embodiment of the present application further provides an electronic device, and the electronic device includes a display screen and the apparatus for biometric identification in the foregoing various embodiments of the present application.

The electronic device may be any electronic device having a display screen, which implements biometric identification by adopting a technical solution of an embodiment of the present application.

The display screen may be made of any material capable of transmitting infrared light, which is not limited in the present application.

It should be noted that specific examples in embodiments of the present application are just for helping those skilled in the art better understand the embodiments of the present application, rather than for limiting the scope of the embodiments of the present application.

It should be understood that terms used in embodiments of the present application and the claims appended hereto are merely for the purpose of describing particular embodiments, rather than being intended to limit the embodiments of the present application. For example, the use of a singular form of "a", "the" and "said" in the embodiment of the present application and the claims appended hereto are also intended to include a plural form, unless otherwise clearly indicated herein by context.

Those of ordinary skill in the art may be aware that, units of the examples described in the embodiments disclosed in this paper may be implemented by electronic hardware, computer software, or a combination of the two. To clearly illustrate interchangeability between the hardware and the software, compositions and steps of the examples have been generally described according to functions in the foregoing illustration. Whether these functions are performed by hardware or software depends on particular applications and designed constraint conditions of the technical solutions. Persons skilled in the art may use different methods to implement the described functions for every particular application, but it should not be considered that such implementation goes beyond the scope of the present application.

In the several embodiments provided in the present application, it should be understood that, the disclosed system and apparatus may be implemented in other manners. For example, the foregoing described apparatus embodiments are merely exemplary. For example, division of the units is merely logical function division and there may be other division manners in practical implementation. For example, multiple units or components may be combined or integrated into another system, or some features may be ignored or not executed. In addition, the displayed or discussed mutual coupling or direct coupling or communication connection may be indirect coupling or communication connection through some interfaces, apparatuses or units, and may also be electrical connection, mechanical connection, or connection in other forms.

The units described as separate parts may or may not be physically separate, and parts displayed as units may or may not be physical units, to be specific, may be located in one position, or may be distributed on a plurality of network units. Some or all of the units may be selected depending on actual requirements to achieve the objectives of the solutions of the embodiments in the present application.

In addition, functional units in the embodiments of the present application may be integrated into a processing unit, or each unit may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of the present application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of the present application. The foregoing storage medium includes: various media capable of storing program codes, such as a U disk, a mobile hard disk, a read-only memory (ROM, Read-Only Memory), a random access memory (RAM, Random Access Memory), a disk, an optical disk or the like.

The foregoing description is merely specific embodiments of the present application. The protection scope of the present application, however, is not limited thereto. Various equivalent modifications or replacements may be readily conceived by any person skilled in the art within the technical scope disclosed in the present application, and such modifications or replacements shall fall within the protection scope of the present application. Therefore, the protection scope of the present application shall be subject to the protection scope of the claims.

## Claims

1. A method for biometric identification, comprising:
performing imaging according to a light signal transmitted from a skin when each light source of at least one light source illuminates the skin sequentially; and
performing biometric identification according to at least one image obtained by the imaging.

2. The method according to claim 1, wherein the at least one light source is an infrared light source, and the light signal is an infrared light signal.

3. The method according to claim 1 or 2, wherein the at least one light source is a plurality of light sources, and the plurality of light sources are arranged in different directions relative to an identification region.

4. The method according to claim 3, wherein the performing biometric identification according to the at least one image obtained by the imaging comprises:
merging a plurality of images obtained by the imaging to obtain a merged image; and
performing biometric identification according to the merged image.

5. The method according to claim 3, wherein the performing biometric identification according to the at least one image obtained by the imaging comprises:
performing biometric identification according to a first image obtained by the imaging;
if the identification according to the first image fails, performing biometric identification according to a next image obtained by the imaging;
if identification according to a plurality of images obtained by the imaging fails, merging the plurality of images to obtain a merged image; and
performing biometric identification according to the merged image.

6. The method according to claim 3, wherein the performing biometric identification according to the at least one image obtained by the imaging comprises:
performing biometric identification according to a first image obtained by the imaging;
if the identification according to the first image fails, merging a plurality of images obtained by the imaging to obtain a merged image; and
performing biometric identification according to the merged image.

7. The method according to claim 5 or 6, wherein the first image is an image obtained by performing imaging according to a light signal transmitted from the skin when a default light source of the plurality of light sources illuminates the skin.

8. The method according to any one of claims 3 to 7, wherein the plurality of light sources comprise a first light source and a second light source, and a connecting line between the first light source and a center of the identification region is perpendicular to a connecting line between the second light source and the center of the identification region.

9. An apparatus for biometric identification, comprising:
at least one light source; and
a sensor configured to perform imaging according to a light signal transmitted from a skin when each light source of at least one light source illuminates the skin sequentially, wherein at least one image obtained by the imaging of the sensor is used for biometric identification.

10. The apparatus according to claim 9, wherein the at least one light source is an infrared light source, and the light signal is an infrared light signal.

11. The apparatus according to claim 9 or 10, wherein the at least one light source is a plurality of light sources, and the plurality of light sources are arranged in different directions relative to an identification region.

12. The apparatus according to any one of claims 9 to 11, wherein the plurality of light sources comprise a first light source and a second light source, and a connecting line between the first light source and a center of the identification region is perpendicular to a connecting line between the second light source and the center of the identification region.

13. The apparatus according to any one of claims 9 to 12, wherein the apparatus further comprises:
a processor configured to perform biometric identification according to at least one image obtained by the imaging of the sensor.

14. The apparatus according to claim 13, wherein the processor is configured to:
merge a plurality of images obtained by the imaging to obtain a merged image; and
perform biometric identification according to the merged image.

15. The apparatus according to claim 13, wherein the processor is configured to:
perform biometric identification according to a first image obtained by the imaging;
if the identification according to the first image fails, perform biometric identification according to a next image obtained by the imaging;
if identification according to a plurality of images obtained by the imaging fails, merge the plurality of images to obtain a merged image; and
perform biometric identification according to the merged image.

16. The apparatus according to claim 13, wherein the processor is configured to:
perform biometric identification according to a first image obtained by the imaging;
if the identification according to the first image fails, merge a plurality of images obtained by the imaging to obtain a merged image; and
perform biometric identification according to the merged image.

17. The apparatus according to claim 15 or 16, wherein the first image is an image obtained by the sensor performing imaging according to a light signal transmitted from the skin when a default light source of the plurality of light sources illuminates the skin.

18. An electronic device, comprising: the apparatus for biometric identification according to any one of claims 9 to 17.
